(19) Europäisches Patentamt
European Patent Office
Office européen des brevets

(11) **EP 4 205 914 A1**

(12) **EUROPEAN PATENT APPLICATION**

(43) Date of publication:
05.07.2023 Bulletin 2023/27

(21) Application number: 22216742.1

(22) Date of filing: 27.12.2022

(51) International Patent Classification (IPC):
**B25J 9/16** (2006.01)      **G05B 19/4061** (2006.01)
B25J 19/06 (2006.01)      F16P 3/14 (2006.01)

(52) Cooperative Patent Classification (CPC):
**B25J 9/1676; B25J 19/023; B25J 19/06;**
**G05B 19/4061;** F16P 3/142; G05B 2219/40202;
G05B 2219/40203

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**KH MA MD TN**

(30) Priority: 29.12.2021 US 202117646434

(71) Applicant: **Datalogic IP Tech S.r.l.**
**40012 Lippo di Calderara di Reno (BO) (IT)**

(72) Inventors:
• **ANDREONI, Gildo**
**41021 Fanano (MO) (IT)**
• **ARRFOU, Mohammad**
**40135 Bologna (BO) (IT)**
• **GIORGIO, Gianluca**
**40129 Bologna (BO) (IT)**
• **PAGLI, Lorenzo**
**40069 Zola Predosa (BO) (IT)**

(74) Representative: **Riccardi, Elisa**
**Barzanò & Zanardo Milano S.p.A.**
**Via Borgonuovo, 10**
**20121 Milano (IT)**

(54) **SYSTEM AND METHOD FOR DETERMINING ALLOWABLE ROBOT SPEED IN A COLLABORATIVE WORKSPACE**

(57)      The disclosure relates to systems and methods for determining and adjusting an allowable maximum speed of a machine for movement in a workspace. One or more sensors monitoring the workspace are arranged to obtain a three-dimensional view of the workspace. Raw data from each of the sensors is acquired and analyzed to determine the positioning and spatial relationship between the human and machine as both move throughout the workspace. This captured data is analyzed to determine a safety protocol that includes a maximum allowable speed for each of various axes of movements for the machine, wherein the safety protocol decreases the maximum allowable speed of the machine only along the one or more axes of movement where the movement of the machine approaches the human.

Fig. 4

**Description**

Information on EU Funding

The project leading to this application has received funding from the European Union's Horizon 2020 research and innovation programme under grant agreement No. 818087.

Background

The present disclosure relates generally to systems and methods for monitoring a shared workspace to ensure the safety of a human working closely with dangerous machinery, such as a robot. In particular, the disclosure relates to systems and methods for determining a maximum allowable speed for movements of the robot in the presence of a human to ensure proper safety protocols are implemented in a collaborative workspace.

Many industries have long relied on industrial robots and other automated equipment to complete various tasks in a safe and efficient manner. To ensure the safety of nearby human workers, this equipment is typically isolated or deployed in separate workspaces and positioned behind fences or other protective barriers. In some industries, humans and robots can work effectively in this manner, so these isolation methods do not impact overall performance. However, in other environments, there is a substantial benefit derived from the synergy of having humans and robots coexisting and working together in a shared workspace. For such arrangements to function properly and realize the impact of a joint human and robot workforce, fences or other physical barriers are ineffective since they would inhibit some or all interaction between the human and robot. Accordingly, other safety measures are required to ensure human safety in the shared workspace is maintained while also fostering a productive environment.

To this end, various virtual barriers have been designed for controlling the actions of the robot (or other automated machine) when the conditions may pose an elevated risk to human safety. For example, in some configurations, an optical sensor system including one or more light emitters and detectors creates a light curtain that defines the boundaries of a safety zone between the human and robot. When the optical sensors detect the presence of the human near or within the safety zone, the system slows down or deactivates the robot to prevent potential injury to the human. While these sensor systems are relatively low cost and easy to configure, the safety zone defined by the light curtain is often static and exists in a two-dimensional space. Because of these limitations, the system is difficult to adapt to a dynamic workplace where the human and robot may be constantly moving, or where the robot moves through a series of wide-ranging trajectories.

Some more recent designs have shifted to the use of three-dimensional optoelectronic sensors or other suitable equipment able to monitor three-dimensional space, such as stereo cameras and time-of-flight cameras. This technology may be used to accurately capture relative distance between the human and robot while one or both are moving within the safety zone. These configurations allow for a closer working relationship between a human and robot since the systems can precisely identify the relative locations between the human and robot in a three-dimensional space, and can be used in dynamic workplaces where the human and robot may move across a range of trajectories and in different movement speeds. Moreover, the three-dimensional safety zones may be constantly adapted based on a real-time position and movement velocity of the robot and the human.

However, even with the implementation of three-dimensional monitoring systems and the development of safety zones and constant monitoring of the shared workspace, issues may arise at any moment as both the robot and human are capable of moving throughout the workspace at varying speeds and directions. In typical configurations, a robot (or other dangerous machine) may include a stationary base and one or more linkages designed to move over various possible trajectories at different speeds across the workspace. In some configurations, the base may be mounted on rails to increase the overall range of motion of the robot linkages within the workspace. In these and other configurations, the robot linkages and/or the human may change positions and movement speed rapidly, thereby creating a potentially dangerous situation at any given time if adequate safety protocols and proper monitoring are not implemented. Typically, robots include encoders for determining position and movement velocity for the robot and all robot linkages and controllers for issuing control commands to the robot linkages. As discussed above, position and velocity information is integral for ensuring the safety of a shared workspace because this information is used in conjunction with a robot's three-dimensional modeling and kinematics to define where the robot is in space, where it will be in the near future. With this information, it is possible to define one or more safety zones that can accurately track a position of the robot at all times and ensure that a human worker is safe while working within a close vicinity of the robot.

In some conventional designs, the robot controller may limit the full range of motion of the robot and/or decrease overall movement velocity in all directions when a human is present or near a safety zone so as to avoid a potential collision with a human in the shared workspace. In addition, robots may incorporate software applications that employ discrete and fixed speed limitations when the human is detected in the safety zone to ensure human safety at all times. While these conventional controls increase the safety of the shared workspace, the limitations tend to be overly conservative and unnecessarily limit the movement speed of the robot, which detrimentally impacts efficiency and overall performance.

Accordingly, the present inventors have identified a need for a system and method capable of dynamically controlling robot speed based on a precise location and movement of the human and the robot. As discussed in further detail below, the system and method adjust the robot movement speed proportionally to the distance between the human and robot, and along a robot movement direction where the robot moves toward the detected human within the safety zone, while allowing higher robot movement speeds along robot movement directions that would increase the separation distance between human and robot. This configuration optimizes overall performance while ensuring the workspace between the human and robot is safe. A method and a system for determining and adjusting an allowable machine speed in a shared workspace including a machine and a human according to the invention are set forth in the independent claims. Advantageous features are set forth in the dependent claims.

Additional aspects and advantages of such methods and systems will be apparent from the following detailed description of example embodiments, which proceed with reference to the accompanying drawings.

Understanding that the drawings depict only certain embodiments and are not, therefore, to be considered limiting in nature, these embodiments will be described and explained with additional specificity and detail with reference to the drawings.

Brief Description of the Drawings

FIG. 1 is a schematic illustration of a monitored shared workspace in accordance with one embodiment.
FIG. 2 is a block diagram illustrating an example control system for a workspace monitoring system in accordance with one embodiment.
FIG. 3 is a block diagram illustrating a workspace monitoring system in accordance with one embodiment.
FIG. 4 is a schematic illustration of a monitored shared workspace in accordance with another embodiment.
FIG. 5 is a block diagram illustrating a method for determining a maximum allowable velocity of a robot using a three-dimensional approach in accordance with one embodiment.
FIGS. 6-9 are images illustrating an example embodiment of the method of FIG. 5.

Detailed Description of Disclosed Embodiments

With reference to the drawings, this section describes particular embodiments and their detailed construction and operation. The embodiments described herein are set forth by way of illustration only and not limitation. The described features, structures, characteristics, and methods of operation may be combined in any suitable manner in one or more embodiments. In view of the disclosure herein, those skilled in the art will recognize that the various embodiments can be practiced without one or more of the specific details or with other methods, components, materials, or the like. In other instances, well-known structures, materials, or methods of operation are not shown or not described in detail to avoid obscuring more pertinent aspects of the embodiments.

In the following description of the figures and any example embodiments, certain embodiments may describe the disclosed subject matter in the context of a workspace shared between a human and a robot to protect personnel and reduce the likelihood of inadvertent injuries. It should be understood that these references are merely example uses for the described systems and methods and should not be considered as limiting. The techniques described herein apply not only to robots in a workspace, but also to any form of dangerous automated machinery, including such machinery for which a minimum safe separation distance may vary over time due to movements of the machine. Moreover, in other embodiments, the concepts described herein may be adapted for uses in other arrangements that may differ from the workspace examples described herein.

In the field of robotics, standards ISO 10218 and ISO/TS 15066 set forth by the International Electrotechnical Commission (IEC) provide speed and separation monitoring guidelines for ensuring a safe workspace between an industrial robot and a human worker. Risk of injury to the human worker may be reduced in these environments by monitoring the workspace to ensure at least a protective separation distance, also referred to as a safety zone in the disclosure, between the human and robot is maintained to avoid collisions, and to guarantee a safe movement speed for the robot at all times while the human and robot move along the workspace. In various conventional designs, the robot system may be slowed down, stopped, or have its trajectory path altered to avoid injury to the human when a human presence is detected within the safety zone. However, as noted previously, conventional systems include constraints that may unduly limit the movement speed of the robot in these circumstances, which impacts overall efficiency and performance of the robot.

As is further described in detail below with collective reference to the figures, the following disclosure relates to systems and methods designed to prioritize human safety in shared workspaces, while also determining a maximum allowable speed for robot movement based on the proximity of the human to the robot, among other variables. As is described in further detail below, the present subject matter discloses a method for determining the maximum allowable speed for the robot using a three-dimensional approach, where speed limitations for the robot are applied for specific vectors in a three-dimensional Cartesian robot axis relating to a real-time position of the robot and the human. The disclosed concept aims to limit the robot speed just in the direction of motion toward the human, where a collision would be more likely, while allowing for higher robot speeds when the robot moves in directions that will increase the separation distance between the human and robot. In other words, when the human and robot are at a defined separation distance relative to one another, speed limitations for the robot are applied only for robot movement along a vector that would result in the robot moving closer to the human. For movement trajectories of the robot that are moving away from a position of the human, no robot speed limitations are applied since the risk of human injury is minimal given the position of the human. In this configuration, the safety of the human is prioritized without unduly impacting overall performance and efficiency of the robot in the shared workspace.

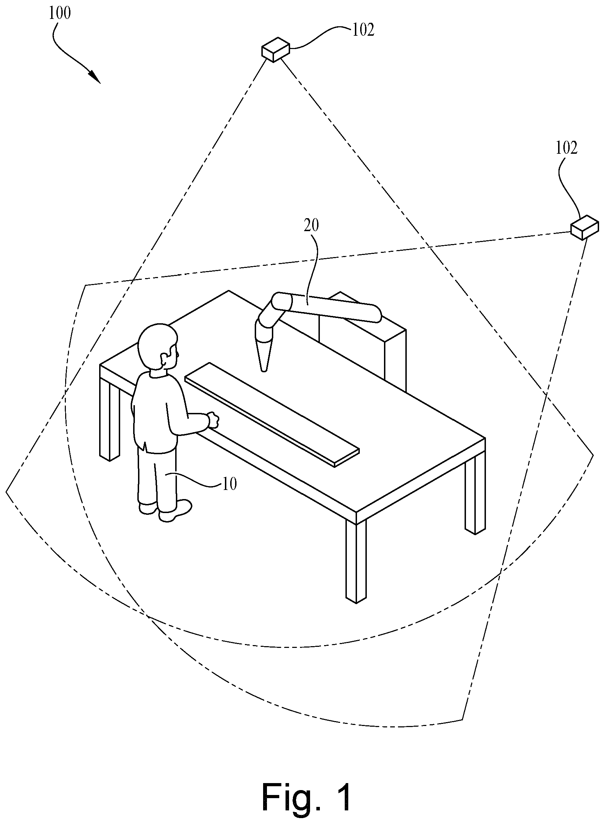

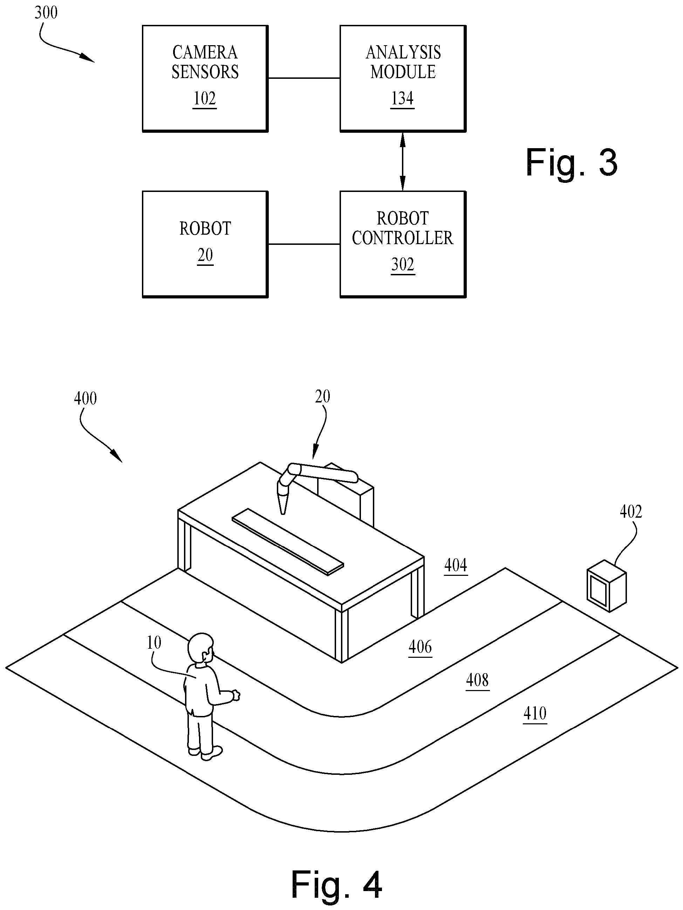

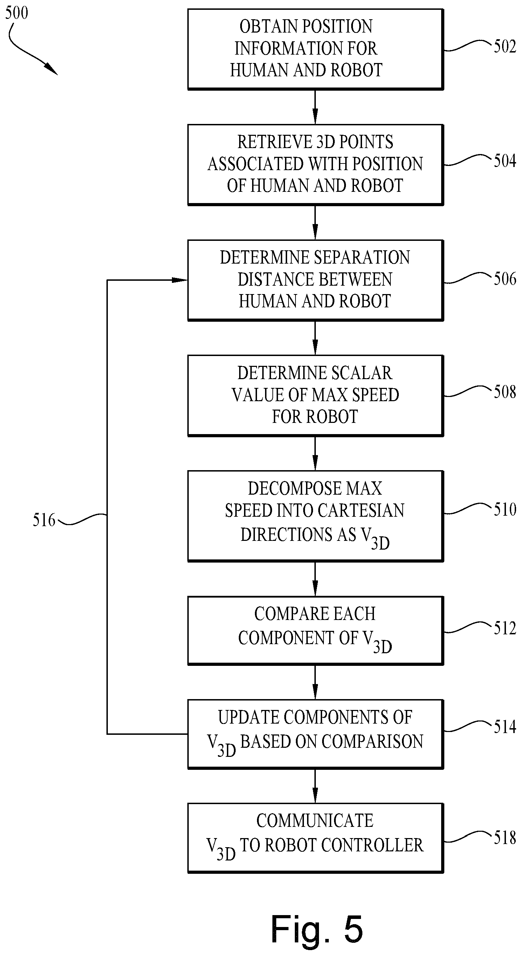

With reference to FIGS. 1-3, the following discussion provides an overview of example systems and methods for monitoring a shared workspace between a human and a robot, followed by a discussion of one example method for adjusting robot speed based on a position of the human with reference to FIG. 4, and finally a more detailed discussion with reference to FIGS. 5-9 of systems and methods for adjusting robot speed based on a position of the human relative to the robot.

Turning now to the figures, FIG. 1 schematically illustrates an example workspace 100 shared by a person 10 and a robot 20 (or another suitable machine). In the workspace 100, the person 10 and the robot 20 may work collaboratively, or may operate independently, or alternate between the two working arrangements. The workspace 100 is monitored by one or more sensors 102 arranged to collectively cover and monitor the workspace 100, particularly those regions of the workspace 100 where the person 10 and robot 20 interact collaboratively. The sensors 102 may be any suitable sensors capable of monitoring the workspace 100. In one embodiment, the sensors 102 are capable of obtaining three-dimensional images or other suitable data for use in determining a spatial relationship between the person 10 and robot 20 in three-dimensional space. For example, in some embodiments, the sensors 102 may include three-dimensional time-of-flight cameras, stereo vision cameras, three-dimensional LIDAR sensor or other radar-based sensors.

The workspace 100 may include any number of sensors 102 needed to ensure the sensors 102 collectively monitor the target regions of the workspace 100 as desired. Preferably, the sensors 102 are arranged to minimize or avoid occlusions to the extent possible to obtain as complete of a three-dimensional view as possible of the workspace shared between the human and robot, and to effectively monitor the workspace 100 with fewer sensors 102. After arranging the sensors 102 around the workspace 100, their position relative to one another may be registered by comparing images as between the sensors to ensure proper calibration and coverage of the workspace 100, and to retrieve the relative position and orientation between the sensors 102 and the base of the robot 10. The calibration step may be used to identify occlusions or static objects in the sensor field-of-view to ensure those objects are accounted for and not considered in future analysis steps. With the sensors 102 properly calibrated relative to one another, the sensor data can be reliably used to monitor positions and movements of the human 10 and robot 20 in the workspace 100.

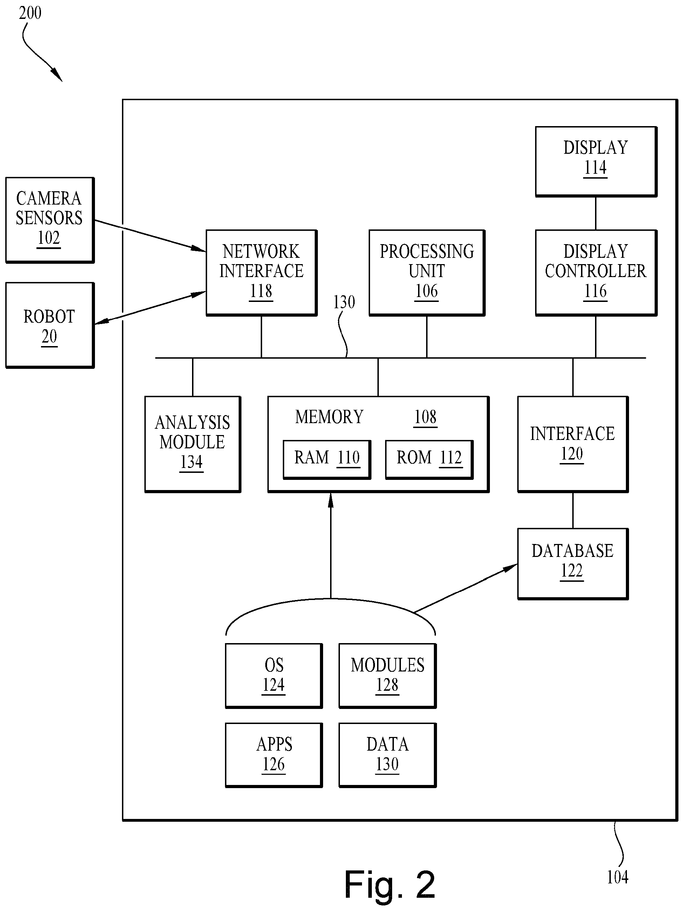

FIG. 2 is a block diagram illustrating components for an example control system 104 for a workspace monitoring system 300 (see FIG. 3) in accordance with one embodiment. With reference to FIG. 2, data from each sensor 102 monitoring the workspace 100 is received by the control system 104. The regions monitored and covered by each sensor 102 may be represented in any suitable form of volumetric representation. The control system 104 includes a central processing unit (CPU) 106 which may be any of various suitable commercially available processors or other logic machine capable of executing instructions. In other embodiments, suitable dual microprocessors or other multi-processor architectures may also be employed as the processing unit 106. The control system 104 further includes memory 108 which may be implemented using one or more standard memory devices. The memory devices may include, for instance, RAM 110, ROM 112, and EEPROM devices, and may also include magnetic or optical storage devices, such as hard disk drives, CD-ROM drives, and DVD-ROM drives. The memory 108 contains instructions stored therein for controlling operation of the CPU 106 and its interactions with other components of the control system 104. In some embodiments, the control system 104 may include a display 114 driven by a display controller 116.

The control system 104 further includes a network interface 118 to communicate with and receive data from the sensors 102. The network interface 118 may facilitate wired or wireless communication with other devices over a short distance (e.g., Bluetooth™) or nearly unlimited distances (e.g., the Internet). In the case of a wired connection, a data bus may be provided using any protocol, such as IEEE 802.3 (Ethernet), advanced technology attachment (ATA), personal computer memory card international association (PCMCIA), and USB. A wireless connection may use low or high powered electromagnetic waves to transmit data using any wireless protocol, such as Bluetooth™, IEEE 802.11b (or other WiFi standards), infrared data association (IrDa), and radio frequency identification (RFID). In addition, a modem module (not shown) or Ethernet module (not shown) may be incorporated to facilitate a WAN networking environment. The control system 104 may also include an interface 120 coupled to a database or internal hard drive 122. Interface 120 may also be coupled to removable memory, such as flash memory, a magnetic floppy disk drive, an optical disk drive, or another drive. Further, the interface 120 may be configured for external drive implementations, such as over a USB, IEEE 1194, or PCMCIA connection.

In one embodiment, any number of program modules may be stored in one or more drives 122 and RAM 110, including an operating system 124, one or more application programs 126, or other program modules 128 (such as instructions to implement the methods described herein), and data 130. All or portions of the program modules may also be cached in RAM 110. Any suitable operating system 124 may be employed, such as Windows Embedded CE, Windows Embedded Handheld, Windows Desktop, Android, Linux, iOS, MacOS, or other commercially available or proprietary operating systems.

The above-described components, including the processing unit 106, memory 108, display controller 116, network interface 118, and interface 120 may be interconnected via a bus 130. While a bus-based architecture is illustrated in FIG. 2, other types of architectures are also suitable (e.g., one or more components may be directly coupled to one another). While the illustrated embodiment depicts one possible configuration of a control system 104, it should be recognized that a wide variety of hardware and software configurations may be provided. For example, other embodiments may have fewer than all of these components or may contain additional components.

As noted previously, data from the sensors 102 monitoring the workspace 100 is received by the control system 104 via any suitable communications means, such as the network interface 118, and stored in memory 108 for processing by an analysis module 134. The analysis module 134 may employ conventional computer-vision techniques, such as deep-learning algorithms or deterministic algorithms, to analyze the data from the sensors 102 and distinguish between humans and automated robots or other workpieces. As is further described in detail below with reference to FIG. 5, the analysis module 134 of the control system 104 may be programmed to analyze the data from the sensors 102 and determine the distance between the human 10 and robot 20 and an adjustment amount for the speed of the robot to avoid potential injury to the person 10. Additional details relating to the processing steps undertaken by the analysis module 134 of the control system 104 to determine the allowable maximum speed of the robot are detailed below with particular reference to FIG. 5.

To establish a general frame of reference, the following briefly describes an example method for determining a safety zone via a workspace monitoring system 300 and monitoring the workspace 100 to ensure safety distances are maintained. FIG. 3 is a schematic diagram illustrating general details of a workspace monitoring system 300 for determining a safety zone for ensuring the safety of a person 10 when working in a workspace 100 with a robot 20 in accordance with one embodiment. As described previously, sensors 102 monitor the workspace 100, where the sensors 102 continuously capture position data relating to the robot 20 and the person 10. The sensors 102 provide real-time information that is analyzed by the analysis module 134 to identify the three-dimensional location of the robot 20 and the person 10, and determine whether the person 10 is located a safe distance away from the robot 20.

As mentioned previously, all aspects of the robot's movement, such as range of motion, movement pattern, and velocity, may be governed by a robot controller 302. The robot controller 302 also determines the instantaneous state of the robot 20, including the current orientation of any robot limbs or joints, their respective movement patterns, and movement velocities. The robot controller 302 also includes all instructions relating to the robot model that controls the behavioral aspects of the robot throughout its operational sequence.

In one example method for determining a safety zone, the analysis module 134 of the control system 104 first obtains data from the sensors 102 and uses this information to identify the location of the person 10, the location of the robot 20, and other objects of interest in the workspace 100. The analysis module 134 (or other component of the control system 104) also communicates (either directly or indirectly) with the robot controller 302 via the network interface 118 or any suitable wireless or wired communication protocols to obtain information relating to the robot model and robot data relating to the movement of the robot 20 and the planned trajectory of the robot 20. With the robot data and the sensor data, along with the safety parameters set forth by the safety zone, the analysis module 134 is able to assess whether the person 10 has or will enter the safety zone. If the analysis module 134 determines that the person 10 and the robot 20 are on a collision course, the control system 104 may communicate with the robot controller 302 to take a safe action, such as by deactivating the robot 20, slowing down the robot 20, or altering the movement pattern of the robot 20 to avoid the collision.

With reference to FIG. 4, the following discussion begins with a general discussion of one conventional method for calculating the maximum allowable speed of the robot using a mathematical model as outlined in the ISO/TS 15066 safety standard referenced previously, followed by an improved method for determining the maximum allowable speed of the robot using a three-dimensional approach with particular reference to FIGS. 5-9. As discussed in further detail below, the improved system and method for determining a maximum allowable speed for the robot 20 based on a relative position of the human 10 and the robot 20.

As noted above, standard ISO/TS 15066 describes a mathematical model for determining speed and separation parameters to maintain safety in a shared workspace and avoid a collision between the human 10 and robot 20. The concept behind the mathematical model aims to ensure that a minimum separation distance between the human and robot is maintained at all times. In configurations where the robot may move across a range of trajectories at various speeds, the movement speed of the human and robot, along with other variables, are used to determine the applicable protective separation distance that must be maintained at any given time. With some rearrangement of various variables in the model, it can be reformulated to instead determine the maximum allowed robot speed based on the human's speed and an actual separation distance between the robot and human. The following provides a brief summary of an example method for calculating the maximum allowable speed of the robot using the mathematical model outlined in ISO/TS 15066.

Based on the model, below is a mathematical formulation for calculating the protective separation distance, $S_p(t_0)$, as follows:

$$S_p(t_0) = S_h + S_r + S_s + C + Z_d + Z_r \qquad (1)$$

where:

$S_p(t_0)$     is the protective separation distance at a time $t_0$;
$t_0$     is the current time;
$S_h$     is the contribution to the protective separation distance attributable to the human's change in location;
$S_r$     is the contribution to the protective separation distance attributable to the robot system's reaction time;
$S_s$     is the contribution to the protective separation distance due to the robot's stopping distance;
$C$     is the intrusion distance, as defined in ISO 13855; this is the distance that a part of the body can intrude into the sensing field before it is detected;
$Z_d$     is the position uncertainty of the human in the workspace, as measured by the presence-sensing devices resulting from the sensing system measurement tolerance; and
$Z_r$     is the position uncertainty of the robot system, resulting from the accuracy of the robot position measurement system.

In the above equation, the contributions for $S_r$ and $S_s$ described in ISO/TS 15066 can be calculated as follows:

$$S_r = \int_{t_0}^{t_0 + T_r} v_r(t)dt \qquad (2)$$

where $v_r$ is the directed speed of the robot in the direction of the human in the workspace and $T_r$ is the robot reaction time. The directed speed may be positive or negative depending on whether the separation between the human and robot is increasing or decreasing. Here, $v_r$ may vary due to either the robot's speed or a change in direction of the robot. The system is designed to limit $v_r$ depending on the separation distance. If a safety-rated speed limit is in effect, the system may trust the speed limitation performed by the robot system.

Similarly, $S_s$ can be calculated as follows:

$$S_s = \int_{t_0 + T_r}^{t_0 + T_r + T_s} v_s(t)dt \qquad (3)$$

where $v_s$ is the speed of the robot in the course of stopping, where the speed is calculated from the activation of the stop command until the robot has come to a full stop; $T_r$ is the robot reaction time; and $T_s$ is the robot stopping time. Here, $v_s$ is a function of time and can vary due to either the robot's speed or its change in direction. The system is designed to account for $v_s$ in the manner that most reduces the separation distance. For example, in the case where the robot's speed is not being monitored, the system assumes that equation (3) is the robot's stopping distance in the direction that most reduces the separation distance. On the other hand, if the robot's speed is being monitored, the system may use the robot's stopping distance based on the monitored speed, applied in the direction that most reduces the separation distance.

The concept of "directed speed" is also described in the ISO/TS 15066 standard, suggesting that an advanced approach can be employed rather than considering just the magnitude value. A common way to ensure that the minimum separation distance is always observed is to retrieve from above-referenced equations (1)-(3) a maximum allowable robot speed that can then be communicated to the robot controller to ensure safe operation. The maximum allowable speed, based on the parameters of the robot system and the sensing system as described above, can be summarized as follows:

$$v_{rmax}(t_0) = \frac{S_p(t_0) - v_h(t_0)(T_s + T_r) - C - Z_d - Z_r}{(T_s + T_r)} - \frac{a_{max}T_s^2}{2(T_s + T_r)} \qquad (4)$$

where $a_{max}$ is the robot deceleration during the stopping phase when considering the velocity of the human constant during integration time. The value for $a_{max}$ is suggested by the standard as being 1.6 m/s or 2.0 m/s if the separation distance is below 0.5 meters or can be retrieved at runtime when a sensing system able to monitor the human speed is employed.

FIG. 4 is a schematic illustration of a workspace 400 in accordance with one example embodiment. With reference to FIG. 4, the following provides a brief discussion for an example use of the mathematic model relating to standard ISO/TS 15066 described above for avoiding potential collisions between a human 10 and robot 20 in the workspace 400. As noted previously, the protective separation distance depends on various robot parameters (e.g., reaction time, stopping performance, etc.) and the parameters of a monitoring device (latency, accuracy, etc.). As illustrated in FIG. 4, the workspace 400 includes one or more sensors 402 operable to monitor a position of the human 10 at runtime. The sensor 402 may be any suitable sensor, such as a laser scanner, a three-dimensional camera, or other two-dimensional or three-dimensional sensors operable to detect a position of the human 10 in a similar manner as discussed previously with reference to FIGS. 1-3. In some embodiments, the workspace 400 may include various statically defined zones for determine which robot functions to employ based on a position of the human 10 relative to the zones.

In FIG. 4, the workspace 400 includes a protection zone 404 closest to a position of the robot 20, where the protection zone 404 is a static a priori defined area where if the human 10 is detected, all movement for the robot 20 is stopped. The protection zone includes the entire area reachable by the robot 20 throughout its operating range of motion, and may also include an additional area not specifically reachable by the robot 20 to account for the minimum separation distance to ensure the robot 20 stops in time when receiving a stop signal. Beyond the protection zone 404 is included a first zone 406, a second zone 408, and a third zone 410 at varying distances from the robot 20. The basic concept here is that a safety action (e.g., an adjustment of the movement velocity of the robot 20) is taken by the robot 20 based on a position of the human 10 within the various monitored zones 404, 406, 408, 410. While the description below provides an example of various safety actions that may be taken by the robot 20 based on the position of the human 10, other embodiments may be different based on the various factors. It should be understood that the description below is meant to provide an example for ease of understanding and should not be considered limiting.

In one example embodiment, when the human 10 is detected by the sensor 402 in the furthest zone 410, little or no adjustment may be necessary for the robot movement speed since the human 10 is not in much danger of colliding with the robot 20. As the human 10 moves toward the robot 20 and into a closer zone 406, some safety action may be taken by the robot 20 since the separation distance has decreased and a potential collision is more probable as compared to when the human 10 was in zone 410. In this scenario, the speed of movement for the robot 20 is decreased in line with equation (4) above to slow down the robot 20 due to the shorter separation distance between the human 10 and robot 20. If the human 10 continues moving toward the robot 20 and enters the zone 406 adjacent the robot 20, the robot speed may be substantially decreased to its minimum speed, or all movement of the robot 20 may cease, to avoid potential injury for the human 10. As noted above, if the human 10 enters the zone 404, all robot movement is stopped. It should be understood that the illustrated zones and the example provided above are for ease of understanding. In other embodiments, the zones may have different boundaries created based on the robot speed, range of motion, and various other factors.

One significant disadvantage of the above-referenced configuration employing the mathematical model highlighted in the ISO/TS 15066 standard is that the concept does not account for the position of the robot 20 at any given time. As such, the concept relies on statically defined monitored zones 404, 406, 408, 410 that are determined using the worst case scenario for the robot 20 to maximize safety. For example, the protection zone 404 is defined to account for the furthest reachable area by the robot 20 at any point in its entire range of motion. As such, the protection zone 404 may be overly inclusive and lead to unnecessary decreases in speed or movement stoppages for the robot 20 that could be avoided if dynamic positioning and movement for both the robot 20 and human 10 were taken into consideration.

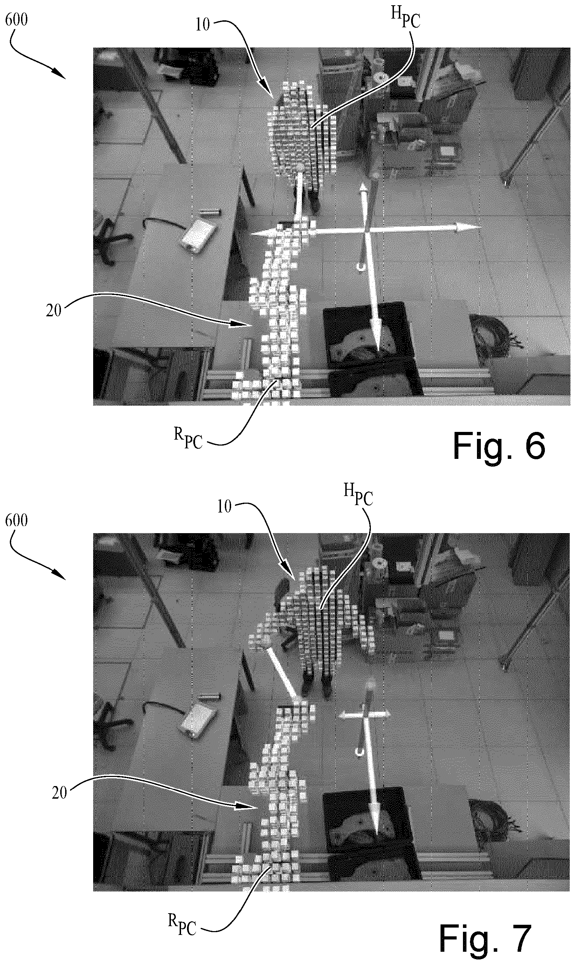

FIG. 5 is a block diagram illustrating a method 500 for determining a safety protocol including a maximum allowable velocity of a robot 20 using a three-dimensional approach in accordance with one embodiment. FIGS. 6-9 are images illustrating an example embodiment of the method 500 of FIG. 5. With collective reference to FIGS. 5-9, the following describes systems and methods for determining the maximum allowable speed of the robot 20 in a dynamic fashion using a three-dimensional vector approach based on a real-time position of the human 10 and the robot 20. The vector approach allows for adjustments to robot speed to also consider the direction of movement of the robot 20 relative to the human 10.

FIGS. 6 and 7 illustrate an example workspace 600 including a human 10 and a robot 20 in accordance with one embodiment. With reference to FIGS. 6 and 7, the one or more three-dimensional sensors (not shown in FIGS. 6 and 7, but similar to sensors 102 from FIG. 1) are arranged to monitor the workspace 600 and capture position information for both the human 10 and the robot 20. Briefly, the concept further described in detail below aims to determine the minimum separation distance between the robot 20 and human 10, and determine one or more vectors in a three-dimensional cartesian axis relating to that minimum distance. With the position information captured by the sensors, the robot speed along any vectors where the robot 20 would move closer to the human 10 is reduced to minimize potential injury to the human 10. For all other vectors where the robot 20 is not moving toward the position of the human 10, speed is not decreased since the likelihood of a collision between the human 10 and robot 20 is essentially zero when the robot 20 is moving away from a position of the human 10. This configuration serves to maximize work efficiency of the robot 20 while also maintaining a safe workspace for the human 10.

Using the above-referenced vector approach, the speed limitations are not simply scalar values that limit robot speed in all directions, but rather focus the speed limitations to specific movement vectors to ensure that movement speed is limited only when the direction of motion of the robot 20 would decrease the separation distance relative to a position of the human 10. In one embodiment, the three-dimensional vector approach described herein uses a total of six values in each of the three cartesian robot axes, considering both the positive and negative direction. In other words, the three-dimensional vector, $V_{3D}$, may be represented as:

$$V_{3D} = \left[ -V_x; -V_y; -V_z; +V_x; +V_y; +V_z \right] \qquad (5)$$

It should be understood that while the approach described herein relates to a configuration with six vector values, other embodiments may use any suitable number of vectors in the calculation. For simplicity, the disclosure proceeds with reference to above-noted configuration, but it should be understood that the example embodiment is for purposes of illustration and is not meant to be limiting.

The following description relates to a method 500 for calculating $V_{3D}$ to determine suitable speed limitations for the robot 20 to avoid potential collisions with the human 10 in the workspace 600. For purposes of the description below, $V_{3D}$, may be initialized as:

$$V_{3D} = \left[ -\infty; -\infty; -\infty; +\infty; +\infty; +\infty \right] \qquad (6)$$

With reference to FIG. 5, at step 502, the analysis module (such as analysis module 134 of control system 104 shown in FIG. 2) receives position information from the sensors (such as sensors 102 of FIG. 1) for the human 10 and robot 20 in the workspace 600. At step 504, the analysis module 134 retrieves a first set of three-dimensional points (also referred to as point cloud) associated with the human 10, and retrieves a second set of three-dimensional points associated with the robot 20. FIGS. 6 and 7 illustrate representative images of the workspace 600 showing an example set of human point cloud $H_{PC}$ and robot point cloud $R_{PC}$. In some embodiments, the respective point cloud for both the human 10 and the robot 20 may be retrieved from the sensor data obtained at step 502. In other embodiments, the analysis module 134 (or other suitable component of the control system 104) may instead retrieve the sets of three-dimensional points associated with the robot 20 via communication with the robot controller 302 or via any other suitable system able to retrieve robot volume occupation. Accordingly, in such embodiments, the sensor data at step 502 may communicate only the three-dimensional points for the human 10.

At step 506, the analysis module 134 uses the sets of human point cloud $H_{PC}$ and robot point cloud $R_{PC}$ to determine a separation distance between the human 10 and robot 20. For example, in one embodiment, the analysis module 134 selects from the sets of point clouds a combination of a robot point $\vec{p_r}$ and a human point $\vec{p_h}$ to determine the vector between the two points (this process is repeated for all points in the sets as described below):

$$\vec{s_p} = \vec{p_r} - \vec{p_h} \qquad (7)$$

Then, the separation distance $d_p$ is determined as a length of the vector:

$$d_p = \left| \vec{s_p} \right| \qquad (8)$$

In some embodiments, the separation distance, $d_p$, is compared to a minimum distance threshold to determine whether the human 10 and robot 20 are sufficiently close relative to one another such that the control system 104 should simply stop all robot movement (e.g., by setting velocities in all vectors to 0). In other words, the following equation may be considered:

$$d_p < (Z_d + Z_r + C + S_h), \text{ then return } V_{3d} = [0; 0; 0; 0; 0; 0]; \text{ else continue} \quad (9)$$

The above-noted calculation implies that under a certain distance threshold, the analysis module 134 (or other suitable component of the control system 104) must stop all robot movement due to various factors, such as the uncertainty of the sensors, or a change of the position of the human during the response time of the sensor 102 and the robot system, or for other suitable reasons. Assuming the minimum distance threshold is satisfied based on a position of the human 10 and robot 20, then the method 500 continues.

At step 508, the analysis module 134 determines the scalar value of the maximum allowed speed of the robot according to the standard ISO/TS 15066, as a function of $d_p$ calculated using equation (8) and of robot parameters $P_r$ (including reaction time, stopping time, stopping performance, etc.) and of sensor parameters $P_s$ (including latency, accuracy, etc.). The maximum speed may be calculated as:

$$v_{max} = f(d_p, P_r, P_s) \quad (10)$$

At step 510, the analysis module 134 calculates the versor (unitary vector) of $\vec{s_p}$ (from equation (7)) as:

$$\hat{s_p} = \frac{1}{|\vec{s_p}|} \vec{s_p} \quad (11)$$

and decomposes the maximum allowable speed $v_{max}$ into the three cartesian directions as:

$$v_{3d} = \left[ \frac{v_{max}}{\hat{s_{px}}} ; \frac{v_{max}}{\hat{s_{py}}} ; \frac{v_{max}}{\hat{s_{pz}}} \right] \quad (12)$$

The above-referenced value can be interpreted as the speed limitation decomposed among cartesian directions that is required to ensure that a collision between the robot $\vec{p_r}$ and the human $\vec{p_h}$ points does not occur.

At step 512, the analysis module 134 compares each component of $V_{3D}$ in view of the values currently stored in $V_{3D}$. At step 514, the components of $V_{3D}$ are updated as necessary. For example, if the calculated result from equation (12) results in a lower speed than the currently stored value for one or more component vectors, that indicates that the robot 20 is moving too fast along the vector to maintain a safe distance and avoid a collision with the human 10. As such, the component vector is updated with the lower speed value to avoid a potential collision between the human 10 and robot 20 and maintain a proper separation distance. If not, then no update is made for the component vector, indicating that the robot 20 may maintain existing speed in that vector since it would result in no collision between the human 10 and robot 20. The selection of the positive or negative component for each axial direction in $V_{3D}$ is based on the sign of the components of $\vec{s_p}$.

At step 516, the process is repeated from step 506 to step 514 until all combinations of robot $\vec{p_r}$ and human $\vec{p_h}$ points in the point clouds $R_{PC}$ and $H_{PC}$ have been computed. As described previously, the result of the method 500 is a three-dimensional vector, $V_{3D}$, containing the most restrictive speed limitations for each cartesian axis (both positive and negative) as retrieved from the analysis of all combinations of points belong to the human 10 and robot 20 in the workspace 600. This solution allows the robot 20 to maintain high movement speed in directions that will increase the separation distance between the human 10 and robot 20 while ensuring low speeds or a full stop in cartesian directions that will decrease the minimum separation distance.

At step 518, after all combinations of robot $\vec{p_r}$ and human $\vec{p_h}$ points in the point clouds $R_{PC}$ and $H_{PC}$ have been computed, the resulting speed limitations in the $V_{3D}$ are communicated from the analysis module 134 to a robot controller (such as robot controller 302 of FIG. 3) for implementation. The robot controller 302 then applies the speed limitations to adjust the speed of robot movements. In some embodiments, a safety check may be implemented by the robot controller 302 to ensure the speed limitations from $V_{3D}$ have been applied and are being respected. For example, in one embodiment, the robot speed may be obtained from the encoder and analyzed to determine whether the robot speed is within the limits set forth in $V_{3D}$. If the check fails, and the robot is exceeding the speeds, then the robot controller 302 may stop the robot 20 to minimize safety risks until the issue is resolved.

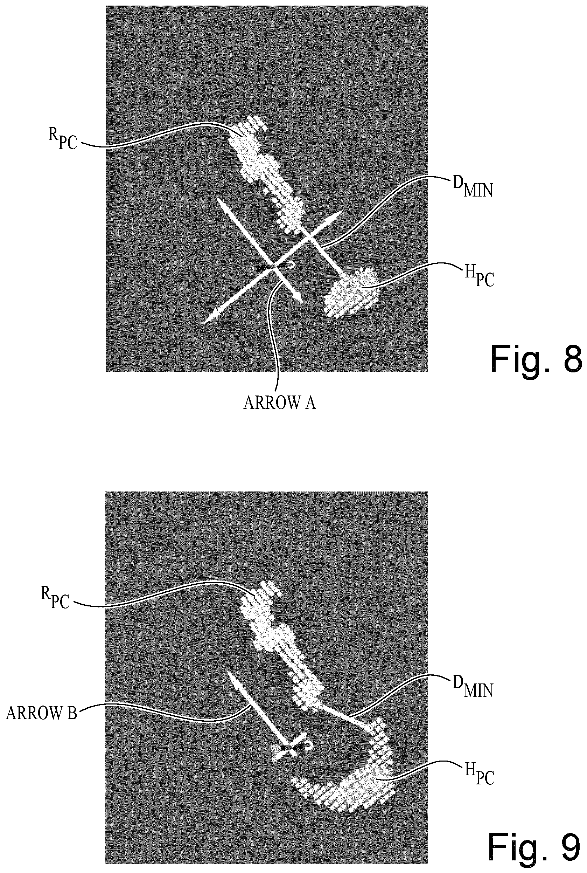

With reference to FIGS. 6-9, the following discussion provides an example embodiment illustrating a visual representation of the method 500. FIGS. 6 and 7 illustrate an example workspace 600 including a human 10 and a robot 20. The respective positions of both the human 10 and robot 20 are represented in sets of three-dimensional points shown as a human point cloud $H_{PC}$ and a robot point cloud $R_{PC}$. FIGS. 8 and 9 are representative illustrations of FIGS. 6 and 7, respectively, highlighting the human point cloud $H_{PC}$ and robot point cloud $R_{PC}$. It should be noted that FIGS. 8 and 9 are arranged in a different point of view for clarity. In the figures, the minimum separation distance, $d_{min}$, between the human 10 and the robot 20 (as represented by their respective point cloud) is illustrated.

As described in the method 500, the object of $V_{3D}$ is to find the maximum allowable robot speed for all of the vectors so as to maintain an adequate separation distance between the human 10 and robot 20 and avoid potential collisions. The end result of this approach is that robot speed is decreased only for vectors where movement of the robot 20 along that vector would decrease the separation distance, $d_p$, between the human 10 and robot 20, in other words, along directions where the robot 20 approaches the human 10. For all other vectors where the robot movement maintains or increases the separation distance, then no change in speed is applied along those vectors so that the robot 20 can continue performing its functions without risking injury to the human 10. In FIGS. 8 and 9, the arrows are oriented as positive and negative cartesian directions, and are scaled according to the magnitude of the components of $V_{3D}$ for this example embodiment. As illustrated in FIG. 8, the arrow A represents the direction where the robot 20 would move toward the human 10. Accordingly, the arrow is smaller in scale as compared to the arrows in the other cartesian directions, indicating that the robot speed in the direction of arrow A is decreased in comparison to the robot speed in the other cartesian directions. In FIG. 9, where the human 10 occupies a wider space as compared to the human 10 in FIG. 8, the arrow B where the robot 20 moves away from the human 10 is larger in scale as compared to the other arrows, indicating that the robot 20 may operate at faster speeds in that direction, but at slower speeds in the other cartesian directions since it would approach the human 10 in those directions.

In some embodiments, certain of the steps described in method 500 may be combined, altered, varied, and/or omitted without departing from the principles of the disclosed subject matter. It is intended that subject matter disclosed in portion herein can be combined with the subject matter of one or more of other portions herein as long as such combinations are not mutually exclusive or inoperable. In addition, many variations, enhancements and modifications of the systems and methods described herein are possible.

The terms and descriptions used above are set forth by way of illustration only and are not meant as limitations. Those skilled in the art will recognize that many variations can be made to the details of the above-described embodiments without departing from the underlying principles of the invention.

The following items are also disclosed herein:

1. A method for determining and adjusting an allowable machine speed in a shared workspace including a machine and a human, the method comprising:

   acquiring, via an analysis module, a first set of three-dimensional data associated with a position of a human within the workspace and a second set of three-dimensional data associated with a position of a machine within the workspace;
   determining, via the analysis module, from a plurality of axes of movement one or more axes of movement for the machine along which movement of the machine decreases a separation distance between the human and the machine based on the first and second sets of three-dimensional data;
   determining, via the analysis module, a safety protocol that includes a maximum allowable speed of the machine for each of the plurality of axes of movement for the machine based on the first and second sets of three-dimensional data, wherein the safety protocol decreases the maximum allowable speed of the machine only along the one or more axes of movement;
   communicating, via the analysis module, the safety protocol to a machine controller associated with the machine; and
   adjusting, via the machine controller, a movement speed of the machine based on the safety protocol.

2. The method of item 1, further comprising receiving, via the analysis module, one or more images from each of one or more sensors, wherein the one or more sensors are arranged to monitor the workspace, and wherein the one or more images include position information for the human in the workspace relative to a position of the respective sensor for each of the one or more sensors, and wherein the analysis module acquires the first set of three-dimensional data from the one or more images.

3. The method of item 2, wherein the one or more images further include position information for the machine in the workspace relative to a position of the respective sensor for each of the one or more sensors, and wherein the analysis module acquires the second set of three-dimensional data from the one or more images.

4. The method of any of items 1-3, wherein the step of acquiring the second set of three-dimensional data associated with the machine includes communicating, via the analysis module, with the machine controller.

5. The method of any of items 1-4, further comprising:

determining, via the analysis module, a minimum separation distance between the human and the machine in the workspace based on the first set of three-dimensional data and the second set of three-dimensional data; and comparing, via the analysis module, the minimum separation distance to a threshold distance, wherein the safety protocol further includes instructions to stop movement of the machine when the minimum separation distance is less than the threshold distance.

6. The method of any of items 1-5, wherein the plurality of axes of movement include three cartesian axes, and wherein the safety protocol includes a vector of six values representing the maximum allowable speed of the machine in both a positive and a negative direction for each of the three cartesian axes.

7. The method of any of items 1-6, wherein the step of determining the safety protocol further comprises:

determining, via the analysis module, a separation distance between the human and the machine in the workspace based on the first set of three-dimensional data and the second set of three-dimensional data; determining, via the analysis module, a scalar value of the maximum allowable speed of the machine based in part on the separation distance; and decomposing, via the analysis module, the maximum allowable speed into three cartesian directions based in part on the scalar value, wherein the plurality of axes of movement of the machine include the three cartesian directions.

8. The method of item 7, further comprising updating, via the analysis module, the maximum allowable speed in the three cartesian directions based on a third set of three-dimensional data associated with the position of the human within the workspace and a fourth set of three-dimensional data associated with the position of the machine within the workspace, wherein the third and fourth sets of three-dimensional data are acquired at a subsequent time relative to the first and second sets of three-dimensional data.

9. The method of any of items 1-8, further comprising:

measuring, via the machine controller, a movement speed of the machine along the plurality of axes of movement; and comparing, via the machine controller, the measured movement speed with the corresponding maximum allowable speed in the safety protocol.

10. The method of item 9, further comprising generating, via the machine controller, a stop signal for the machine, or robot, if the measured movement speed exceeds the maximum allowable speed.

11. A system for determining and adjusting an allowable machine speed in a shared workspace including a machine and a human, the system comprising:

one or more sensors arranged to monitor the workspace including a human and a machine; an analysis module operable to acquire a first set of three-dimensional data associated with a position of the human within the workspace and a second set of three-dimensional data associated with a position of the machine within the workspace, the analysis module further operable to determine from a plurality of axes of movement one or more axes of movement for the machine along which movement of the machine decreases a separation distance between the human and the machine based on the first and second sets of three-dimensional data, and to determine a safety protocol that includes a maximum allowable speed of the machine for each of the plurality of axes of movement for the machine based on the first and second sets of three-dimensional data, wherein the safety protocol decreases the maximum allowable speed of the machine only along the one or more axes of movement; and a machine including a machine controller operable to control movement speed of the machine, the machine controller in operable communication with the analysis module, wherein the machine controller receives the safety protocol from the analysis module, the machine controller adjusting a movement speed of the machine based on the safety protocol.

12. The system of item 11, wherein the one or more sensors are operable to acquire one or more images of the workspace including position information for the human in the workspace relative to a position of the respective sensor for each of the one or more sensors, and wherein the analysis module acquires the first set of three-dimensional data from the one or more images.

13. The system of item 12, wherein the one or more images further include position information for the machine in the workspace relative to a position of the respective sensor for each of the one or more sensors, and wherein the analysis module acquires the second set of three-dimensional data from the one or more images.

14. The system of any of items 11-13, wherein the analysis module acquires the second set of three-dimensional data associated with the machine from the machine controller.

15. The system of any of items 11-14, wherein the analysis module is further operable to determine a minimum separation distance between the human and the machine in the workspace based on the first set of three-dimensional data and the second set of three-dimensional data, and to compare the minimum separation distance to a threshold distance, wherein the safety protocol further includes instructions to stop movement of the machine when the minimum separation distance is less than the threshold distance.

16. The system of any of items 11-15, wherein the plurality of axes of movement include three cartesian axes, and wherein the safety protocol includes a vector of six values representing the maximum allowable speed of the machine in both a positive and a negative direction for each of the three cartesian axes.

17. The system of any of items 11-16, wherein the analysis module is further operable to determine a separation distance between the human and the machine in the workspace based on the first set of three-dimensional data and the second set of three-dimensional data, determine a scalar value of the maximum allowable speed of the machine based in part on the separation distance, and decompose the maximum allowable speed into three cartesian directions based in part on the scalar value, wherein the plurality of axes of movement of the machine include the three cartesian directions.

18. The system of item 17, wherein the analysis module is further operable to update the maximum allowable speed in the three cartesian directions based on a third set of three-dimensional data associated with the position of the human within the workspace and a fourth set of three-dimensional data associated with the position of the machine within the workspace, wherein the third and fourth sets of three-dimensional data are acquired at a subsequent time relative to the first and second sets of three-dimensional data.

19. The system of any of items 11-18, the machine controller further operable to measure a movement speed of the machine along the plurality of axes of movement, and compare the measured movement speed with the corresponding maximum allowable speed in the safety protocol.

20. The system of item 19, wherein the machine controller is further operable to generate a stop signal for the robot if the measured movement speed exceeds the maximum allowable speed.

**Claims**

1. A method for determining and adjusting an allowable machine speed in a shared workspace including a machine and a human, the method comprising:

   acquiring, via an analysis module, a first set of three-dimensional data associated with a position of a human within the workspace and a second set of three-dimensional data associated with a position of a machine within the workspace;
   determining, via the analysis module, from a plurality of axes of movement one or more axes of movement for the machine along which movement of the machine decreases a separation distance between the human and the machine based on the first and second sets of three-dimensional data;
   determining, via the analysis module, a safety protocol that includes a maximum allowable speed of the machine for each of the plurality of axes of movement for the machine based on the first and second sets of three-dimensional data, wherein the safety protocol decreases the maximum allowable speed of the machine only along the one or more axes of movement;

communicating, via the analysis module, the safety protocol to a machine controller associated with the machine; and

adjusting, via the machine controller, a movement speed of the machine based on the safety protocol.

2. The method of claim 1, further comprising receiving, via the analysis module, one or more images from each of one or more sensors, wherein the one or more sensors are arranged to monitor the workspace, and wherein the one or more images include position information for the human in the workspace relative to a position of the respective sensor for each of the one or more sensors, and wherein the analysis module acquires the first set of three-dimensional data from the one or more images, wherein optionally: the one or more images further include position information for the machine in the workspace relative to a position of the respective sensor for each of the one or more sensors, and wherein the analysis module acquires the second set of three-dimensional data from the one or more images.

3. The method of any of claims 1 or 2, wherein the step of acquiring the second set of three-dimensional data associated with the machine includes communicating, via the analysis module, with the machine controller.

4. The method of any of claims 1-3, further comprising:

determining, via the analysis module, a minimum separation distance between the human and the machine in the workspace based on the first set of three-dimensional data and the second set of three-dimensional data; and comparing, via the analysis module, the minimum separation distance to a threshold distance, wherein the safety protocol further includes instructions to stop movement of the machine when the minimum separation distance is less than the threshold distance.

5. The method of any of claims 1-4, wherein the step of determining the safety protocol further comprises:

determining, via the analysis module, a separation distance between the human and the machine in the workspace based on the first set of three-dimensional data and the second set of three-dimensional data; determining, via the analysis module, a scalar value of the maximum allowable speed of the machine based in part on the separation distance; and decomposing, via the analysis module, the maximum allowable speed into three cartesian directions based in part on the scalar value, wherein the plurality of axes of movement of the machine include the three cartesian directions.

6. The method of claim 5, further comprising updating, via the analysis module, the maximum allowable speed in the three cartesian directions based on a third set of three-dimensional data associated with the position of the human within the workspace and a fourth set of three-dimensional data associated with the position of the machine within the workspace, wherein the third and fourth sets of three-dimensional data are acquired at a subsequent time relative to the first and second sets of three-dimensional data.

7. The method of any of claims 1-6, further comprising:

measuring, via the machine controller, a movement speed of the machine along the plurality of axes of movement; and comparing, via the machine controller, the measured movement speed with the corresponding maximum allowable speed in the safety protocol, and optionally generating, via the machine controller, a stop signal for the machine if the measured movement speed exceeds the maximum allowable speed.

8. A system for determining and adjusting an allowable machine speed in a shared workspace including a machine and a human, the system comprising:

one or more sensors arranged to monitor the workspace including a human and a machine; an analysis module operable to acquire a first set of three-dimensional data associated with a position of the human within the workspace and a second set of three-dimensional data associated with a position of the machine within the workspace, the analysis module further operable to determine from a plurality of axes of movement one or more axes of movement for the machine along which movement of the machine decreases a separation distance between the human and the machine based on the first and second sets of three-dimensional data, and to determine a safety protocol that includes a maximum allowable speed of the machine for each of the plurality of axes of movement for the machine based on the first and second sets of three-dimensional data, wherein the safety protocol decreases the maximum allowable speed of the machine only along the one or more axes of movement; and

a machine including a machine controller operable to control movement speed of the machine, the machine controller in operable communication with the analysis module, wherein the machine controller receives the safety protocol from the analysis module, the machine controller adjusting a movement speed of the machine based on the safety protocol.

9. The system of claim 8, wherein the one or more sensors are operable to acquire one or more images of the workspace including position information for the human in the workspace relative to a position of the respective sensor for each of the one or more sensors, and wherein the analysis module acquires the first set of three-dimensional data from the one or more images, wherein optionally:

the one or more images further include position information for the machine in the workspace relative to a position of the respective sensor for each of the one or more sensors, and wherein the analysis module acquires the second set of three-dimensional data from the one or more images.

10. The system of any of claims 8-9, wherein the analysis module acquires the second set of three-dimensional data associated with the machine from the machine controller.

11. The system of any of claims 8-10, wherein the analysis module is further operable to determine a minimum separation distance between the human and the machine in the workspace based on the first set of three-dimensional data and the second set of three-dimensional data, and to compare the minimum separation distance to a threshold distance, wherein the safety protocol further includes instructions to stop movement of the machine when the minimum separation distance is less than the threshold distance.

12. The system of any of claims 8-11, wherein the analysis module is further operable to determine a separation distance between the human and the machine in the workspace based on the first set of three-dimensional data and the second set of three-dimensional data, determine a scalar value of the maximum allowable speed of the machine based in part on the separation distance, and decompose the maximum allowable speed into three cartesian directions based in part on the scalar value, wherein the plurality of axes of movement of the machine include the three cartesian directions.

13. The system of claim 12, wherein the analysis module is further operable to update the maximum allowable speed in the three cartesian directions based on a third set of three-dimensional data associated with the position of the human within the workspace and a fourth set of three-dimensional data associated with the position of the machine within the workspace, wherein the third and fourth sets of three-dimensional data are acquired at a subsequent time relative to the first and second sets of three-dimensional data.

14. The system of any of claims 8-13, the machine controller further operable to measure a movement speed of the machine along the plurality of axes of movement, and compare the measured movement speed with the corresponding maximum allowable speed in the safety protocol, and optionally to generate a stop signal for the robot if the measured movement speed exceeds the maximum allowable speed.

15. The method of any of claims 1-7 or the system of any of claims 8-14, wherein the plurality of axes of movement include three cartesian axes, and wherein the safety protocol includes a vector of six values representing the maximum allowable speed of the machine in both a positive and a negative direction for each of the three cartesian axes.

Fig. 1

Fig. 2

300

CAMERA
SENSORS
102

ANALYSIS
MODULE
134

ROBOT
20

ROBOT
CONTROLLER
302

# Fig. 3

400

20

402

404

10

406

408

410

# Fig. 4

500

OBTAIN POSITION
INFORMATION FOR
HUMAN AND ROBOT — 502

RETRIEVE 3D POINTS
ASSOCIATED WITH POSITION
OF HUMAN AND ROBOT — 504

DETERMINE SEPARATION
DISTANCE BETWEEN
HUMAN AND ROBOT — 506

DETERMINE SCALAR
VALUE OF MAX SPEED
FOR ROBOT — 508

DECOMPOSE MAX
SPEED INTO CARTESIAN
DIRECTIONS AS $V_{3D}$ — 510

516

COMPARE EACH
COMPONENT OF $V_{3D}$ — 512

UPDATE COMPONENTS OF
$V_{3D}$ BASED ON COMPARISON — 514

COMMUNICATE
$V_{3D}$ TO ROBOT CONTROLLER — 518

Fig. 5

Fig. 6

Fig. 7

Fig. 8

Fig. 9

**Europäisches Patentamt**
**European Patent Office**
**Office européen des brevets**

# EUROPEAN SEARCH REPORT

Application Number

EP 22 21 6742

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2018/222050 A1 (VU CLARA [US] ET AL) 9 August 2018 (2018-08-09) * paragraph [0020] * * paragraph [0031] * * paragraph [0054] – paragraph [0060] * * paragraph [0063] – paragraph [0069] * ----- | 1-14 | INV. B25J9/16 G05B19/4061 ADD. B25J19/06 F16P3/14 |
| X | US 2021/260770 A1 (VU CLARA [US] ET AL) 26 August 2021 (2021-08-26) * paragraph [0032] * * paragraph [0042] – paragraph [0043] * * paragraph [0062] – paragraph [0064] * * paragraph [0070] – paragraph [0077] * * paragraph [0081] – paragraph [0084] * ----- | 1-15 | |

TECHNICAL FIELDS
SEARCHED (IPC)

G05B
F16P
B25J

The present search report has been drawn up for all claims

| Place of search | Date of completion of the search | Examiner |
|---|---|---|
| The Hague | 15 May 2023 | De Porcellinis, S |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 22 21 6742

This annex lists the patent family members relating to the patent documents cited in the above-mentioned European search report.
The members are as contained in the European Patent Office EDP file on
The European Patent Office is in no way liable for these particulars which are merely given for the purpose of information.

15-05-2023

| Patent document cited in search report | | Publication date | Patent family member(s) | | Publication date |
|---|---|---|---|---|---|
| US 2018222050 | A1 | 09-08-2018 | CA | 3052961 A1 | 16-08-2018 |
| | | | CN | 110494900 A | 22-11-2019 |
| | | | EP | 3580735 A1 | 18-12-2019 |
| | | | EP | 4088890 A1 | 16-11-2022 |
| | | | EP | 4088891 A1 | 16-11-2022 |
| | | | ES | 2927177 T3 | 03-11-2022 |
| | | | JP | 6752499 B2 | 09-09-2020 |
| | | | JP | 6898012 B2 | 07-07-2021 |
| | | | JP | 7122776 B2 | 22-08-2022 |
| | | | JP | 2020059121 A | 16-04-2020 |
| | | | JP | 2020511325 A | 16-04-2020 |
| | | | JP | 2021126767 A | 02-09-2021 |
| | | | US | 2018222050 A1 | 09-08-2018 |
| | | | US | 2018222051 A1 | 09-08-2018 |
| | | | US | 2018222052 A1 | 09-08-2018 |
| | | | US | 2019061158 A1 | 28-02-2019 |
| | | | US | 2021069906 A1 | 11-03-2021 |
| | | | US | 2021069907 A1 | 11-03-2021 |
| | | | WO | 2018148181 A1 | 16-08-2018 |
| US 2021260770 | A1 | 26-08-2021 | NONE | | |

EPO FORM P0459

For more details about this annex : see Official Journal of the European Patent Office, No. 12/82